# EUROPÄISCHE PATENTSCHRIFT

(11) **EP 3 235 768 B1**
(45) Veröffentlichungstag und Bekanntmachung des Hinweises auf die Patenterteilung: **11.09.2019**
(21) Anmeldenummer: 16166648.2
(22) Anmeldetag: 22.04.2016
(51) Int. Cl.: B65G 54/02, B60L 15/00, B60L 13/03, B60M 7/00, H04L 12/407, H04L 12/403, H02K 11/215

(54) **STATORSEGMENT FÜR EIN LINEARMOTORBASIERTES TRANSPORTSYSTEM UND TRANSPORTSYSTEM**
STATOR SEGMENT FOR A LINEAR MOTOR BASED TRANSPORT SYSTEM AND TRANSPORT SYSTEM
SEGMENT DE STATOR POUR UN SYSTÈME DE TRANSPORT À MOTEUR LINÉAIRE ET SYSTÈME DE TRANSPORT

(43) Veröffentlichungstag der Anmeldung: 25.10.2017
(73) Patentinhaber: Siemens Aktiengesellschaft, 80333 München (DE); FESTO AG & Co. KG, 73734 Esslingen (DE)
(72) Erfinder: Albert, Fabian, 71394 Kernen im Remstal (DE); Jäntsch, Michael, 91052 Erlangen (DE); Gierden, Marco, 91085 Weisendorf (DE); Hartramph, Ralf, 73095 Albershausen (DE); Rothe, Sven, 99891 Tabarz (DE); Spindler, Carsten, 07368 Remptendorf (DE); Veit, Andreas, 70794 Filderstadt (DE)

(56) Entgegenhaltungen:
- WO-A2-98/50760
- US-A1- 2012 247 925
- PETER MUTSCHLER: "Comparison of topologies for linear drives in industrial material handling and processing applications", POWER ELECTRONICS, 2007. ICPE '07. 7TH INTERNATONAL CONFERENCE ON, IEEE, PISCATAWAY, NJ, USA, 22. Oktober 2007 (2007-10-22), Seiten 1027-1032, XP031367212, ISBN: 978-1-4244-1871-8
- MIHALACHI M ET AL: "Motion control for long primary linear drives used in material handling", POWER ELECTRONICS AND MOTION CONTROL CONFERENCE (EPE/PEMC), 2010 14TH INTERNATIONAL, IEEE, PISCATAWAY, NJ, USA, 6. September 2010 (2010-09-06), Seiten T5-94, XP031778368, ISBN: 978-1-4244-7856-9

## Beschreibung

Die Erfindung betrifft ein Statorsegment für ein linearmotorbasiertes Transportsystem, umfassend ein Mittel zur Erzeugung eines magnetischen Wanderfeldes, ein Positionserfassungsmittel zur Ermittlung einer Position eines auf dem Statorsegment befindlichen Transportläufers, eine Sendeeinheit zum zyklischen Übertragen eines Regelungsdatensatzes in einem ersten Takt.

Im Sinne der Erfindung wird unter Statorsegment ein Primärteil eines Linearmotors verstanden in dem Zusammenhang weist ein Transportläufer ein Sekundärteil des Linearmotors auf. Durch ein individuelles Bestromen von beispielsweise Spulen der Mittel zum Erzeugen eines magnetischen Wanderfeldes wird ein Magnetfeld erzeugt und der Transportläufer bzw. sein Sekundärteil kann sich über das Statorsegment bzw. dessen Primärteil hinwegbewegen. Das magnetische Wanderfeld nimmt demnach Dauermagnete des Transportläufers mit. Durch eine Regelung der Stromstärke des Stromes durch die Spulen kann ein Kraftbedarf und eine Geschwindigkeit angepasst werden.

Die internationale Anmeldung WO 98/50760 A2 offenbart ein modulares Fördersystem mit mehreren beweglichen Elementen mit einer unabhängigen Steuerung. Es wird ein Steuerungsgerät offenbart, welches Kraftsollwerte und Stromwerte für ein Spulenpaar bereitstellt um eine Position für ein auf den Transportweg befindliches Fahrzeug bereitzustellen. Das Steuerungsgerät kommuniziert den Kraftsollwert und bestimmt die Position zum Steuerungsgerät mit einer Geschwindigkeit von etwa 1 kHz. Nachteilig an dem modularen Fördersystem ist insbesondere das dort Leseköpfe zur Positionserkennung verwendet werden, welche durch eine Vielzahl von Drähten an ein FPGA in der Steuereinheit angeschlossen sind.

Die US 2012/0247925 A1 offenbart ebenfalls ein modulares Transportsystem, wobei über den Anschluss von möglichen Leseköpfen zur Positionsbestimmung gar nichts ausgesagt wird.

Das Dokument "Comparison of topologies for linear drives in industrial material handling and processing applications" von Peter Mutschler offenbart im Wesentlichen den Einsatz eines Permanentmagnetens für ein modular aufbaubares Transportsystem.

Das Dokument "Motion control for long primary linear drives used in material handling" von M. Mihalachi offenbart ein linearmotorbasiertes Transportsystem welches sensorlos betrieben wird.

Unter der Internetadresse www.festo.com/cms/de_de_53585.htm ist ein linearmotorbasiertes Transportsystem offenbart. In den bisher bekannten Anlagen, die linearmotorbasierte Transportsysteme einsetzen, werden zur Erfassung der Positionen der Transportläufer zusätzlich zu Motorgebern der Statorsegmente, welche für die Regelung der Statorsegmente benötigt werden, Multipositionsgeber verbaut. Diese Multipositionsgeber sind in der Lage die Position von mehreren Transportläufern zu detektieren und einer übergeordneten Steuereinheit zur Verfügung zu stellen, wobei in der übergeordneten Steuereinheit ein Ablaufprogramm zur Bewegungssteuerung abläuft. Nachteilig an diesem Vorgehen ist, dass der bisher eingesetzte Multipositionsgeber sich durchgehend über mehrere Segmente erstreckt und an ein zusätzliches Bussystem angeschlossen werden muss. Jedoch wird der schon vorhandene Motorgeber an einen ersten Bus, welcher insbesondere zur Antriebsregelung der Statorsegmente benötigt wird, angeschlossen. Der Multipositionsgeber muss dann zusätzlich an einen zweiten Bus angeschlossen werden, welcher wiederum mit der übergeordneten Steuerung verbunden ist.

Es ist Aufgabe der vorliegenden Erfindung eine Systemkomplexität eines linearmotorbasierten Transportsystems zu reduzieren.

Die Aufgabe wird mit einem Statorsegment für ein linearmotorbasiertes Transportsystem ausgestaltet um zumindest einen Transportläufer aufzunehmen, umfassend ein Mittel zur Erzeugung eines magnetischen Wanderfeldes, ein Positionserfassungsmittel ausgestaltet zur Ermittlung einer Position eines auf dem Statorsegment befindlichen Transportläufers, eine Sendeeinheit ausgestaltet zum zyklischen Übertragen eines Regelungsdatensatzes zu einen Umrichter für eine geregelte Stromversorgung der Mittel (20) zur Erzeugung eines magnetischen Wanderfeldes in einem ersten Takt, wobei das Positionserfassungsmittel ausgestaltet ist mehrere Positionen einer Mehrzahl von Transportläufern auf dem Statorsegment zu detektieren, wobei eine Auswerteeinheit vorhanden ist, welche mit dem Positionserfassungsmittel verbunden ist, um die detektierten Positionen zu ermitteln, und mit der Sendeeinheit verbunden ist um die Positionen an die Sendeeinheit zu übergeben, dadurch gelöst, dass die Sendeeinheit derart weitergebildet ist, dass diese zusätzlich zu der Übertragung des Regelungsdatensatzes einen Positionswert taktsynchron mit überträgt, wobei die mehreren Positionen als eine Folge mit einer Anzahl an Gliedern vorliegen und ein Glied mit einem Index einer Position entspricht, dabei ist die Sendeeinheit weiterhin ausgestaltet mit jedem ersten Takt den Index ausgehend von einen Startwert zu inkrementieren und ein Glied im Anschluss an den Regelungsdatensatz zu übertragen, wobei die Sendeeinheit weiterhin dazu ausgestaltet ist, die Übertragung aller Glieder in einen Übertragungsintervall durchzuführen. Insbesondere könnte das Übertragungsintervall einen Vielfachen des ersten Taktes entsprechen.

Erfindungsgemäß wird vorgeschlagen, Positionsgeber bzw. Statorsegmente zu verwenden, die neben dem Übertragen der für eine Regelung nötigen Messwerte auch in der Lage sind, mehrere Transportläuferpositionen zu erfassen. Diese können zunächst einer Antriebsregelung über den verwendeten ersten Bus, insbesondere einen Echtzeitbus, die Multipositionswerte übermitteln. Die Antriebsregelung übermittelt wiederum einer übergeordneten Steuerung über ein ebenfalls bereits vorhandenes Bussystem die Multipositionswerte. Zu diesem Zweck ist das Positionserfassungsmittel in der Lage mehrere Positionen gleichzeitig zu erfassen. In diesem Fall kann der bei dem nachteilig aufgezeigten Stand der Technik zusätzliche Multipositionsgeber vollständig wegfallen.

Besonders vorteilhaft ist es, wenn die Auswerteeinheit ausgestaltet ist, in einem zweiten Takt die Positionen zu ermitteln und der zweite Takt einem Vielfachen des ersten Taktes entspricht. In der Regel wird sowohl eine Bewegungssteuerung, als auch eine Kombination zwischen einer Bewegungssteuerung und einer Antriebsregelung mit einem langsameren Takt als die Antriebsregelung selbst ausgeführt. Aus diesem Grund werden die Multipositionswerte ebenfalls nur in einem langsameren Takt benötigt als die Daten für die Regelung. Dementsprechend ist es möglich, die Multipositionswerte in einem sogenannten alternierend zyklischen Telegramm zu übermitteln. Ein solches Telegramm besitzt demnach einen zyklischen Anteil für den Regelungsdatensatz, der in einem "schnellen" Takt übermittelt werden muss, und einen alternierenden Anteil, dessen Inhalt über die Zeit "gemultiplext" wird. Auf diese Art können mehrere Multipositionswerte über den ersten Bus kommuniziert werden, ohne eine Regelung zu beeinflussen, da dieser erste Bus nun kaum stärker belastet wird als vorher. In der übergeordneten Steuereinheit, in welcher das Programm für die Bewegungssteuerung abläuft, können die von allen Positionserfassungsmittel erfassten Positionen geeignet zu einer Darstellung aller Läuferpositionen zusammengesetzt werden.

Auch wird die eingangs genannte Aufgabe durch ein Transportsystem umfassend ein Statorsegment mit den Merkmalen gemäß Anspruch 1, einen ersten Bus, einen zweiten Bus, eine Kontrolleinheit, eine Steuereinheit, gelöst,
wobei die Sendeeinheit derart weitergebildet ist, dass diese zusätzlich zu der Übertragung des Regelungsdatensatzes einen Positionswert taktsynchron mit überträgt, wobei die mehreren Positionen als eine Folge mit einer Anzahl an Gliedern vorliegen und ein Glied mit einem Index einer Position entspricht, dabei ist die Sendeeinheit weiterhin ausgestaltet mit jedem ersten Takt den Index ausgehend von einem Startwert zu inkrementieren und ein Glied im Anschluss an den Regelungsdatensatz über den ersten Bus an die Kontrolleinheit zu übertragen, wobei die Sendeeinheit weiterhin ausgestaltet ist, die Übertragung aller Glieder in einem Übertragungsintervall durchzuführen. Insbesondere könnte das Übertragungsintervall einem Vielfachen des ersten Taktes entsprechen. Die Kontrolleinheit ist dazu ausgestaltet, die Folge entgegenzunehmen und ist weiterhin dazu ausgestaltet die Folge über den zweiten Bus an die Steuereinheit zu übergeben.

Durch eine taktsynchrone Anbindung aller im System vorhandenen Komponenten kann gewährleistet werden, dass alle Positionen vom gleichen Zeitpunkt stammen. Von Vorteil ist es nun, dass eine zusätzliche Komponente wie der nach dem Stand der Technik bekannte zusätzliche Multipositionsgeber nun vollständig entfallen kann. Dies führt, neben einer Kostenreduktion, zu einer vereinfachten Projektierung und Inbetriebnahme bei linearmotorbasierten Transportsystemen. Weiterhin entfallen Varianten bei den Linearmotorsegmenten, weil nun alle nur noch mit einem einzigen Positionserfassungsmittel ausgestattet werden müssen, ohne vorher entscheiden zu müssen, ob das Segment als ein geregeltes Segment oder als ein gesteuertes Segment betrieben werden soll.

Eine Weiterführung des Transportsystemes sieht vor, die Steuereinheit dazu auszugestalten mit Hilfe der Position eine geografische Darstellung der Orte aller im System befindlichen Transportläufer zu ermitteln. Diese geografische Darstellung könnte von der Steuereinheit an ein HMI-System weitergegeben werden und für einen Benutzer darauf visualisiert werden. Weiterhin kann mit der Darstellung der Orte aller im System befindlichen Positionen die Überwachung der Positionen der Transportläufer erleichtert werden.

Um die Mittel zur Erzeugung des magnetischen Wanderfeldes mit einem Strom zu versorgen, steht vorteilhafter Weise ein Umrichter zur Verfügung.

Da mit dem Umrichter geregelt werden kann und gemäß dem Regelungsdatensatz auf beispielsweise Stromstärke, Phasenverschiebung, Kommutierungswinkel oder Motortemperatur geregelt wird, ist der Umrichter an den ersten Bus angeschlossen.

Das Positionserfassungsmittel ist als ein Wegaufnehmer ausgestaltet, welches nach einem der Prinzipien
magnetostriktiv,
kapazitiv,
magnetisch,
optisch, differential transformatorisch,
insbesondere magnetisch nach dem Halleffekt Prinzip, arbeitet und damit als ein Multipositionserfassungsmittel arbeitet.

Weiterhin ist das Positionserfassungsmittel derart angeordnet, dass es nicht durch einen Sekundärteil (Permanentmagneten) des Transportläufers beeinflusst wird, wobei die Transportläufer zur Positionsermittlung einen Permanentmagneten oder ein optisches Element als Positionsgeber für das Positionserfassungsmittel aufweisen.

Im Folgenden wird die Erfindung anhand eines in der Zeichnung aufgezeigten Ausführungsbeispiels näher erläutert. Es zeigen
- FIG 1: ein Statorsegment in einer schematischen perspektivischen Ansicht,
- FIG 2: das aus FIG 1 bekannte Statorsegment in einer anderen Ansicht mit darauf befindlichen Transportläufern,
- FIG 3: ein linearmotorisiertes Transportsystem,
- FIG 4: einen zeitlichen Ablauf von gesendeten Regelungsdaten mit zusätzlich gesendeten Multipositionswerten und
- FIG 5: ein mögliches Telegramm mit Regelungsdaten und einem angehängten Multipositionswert.

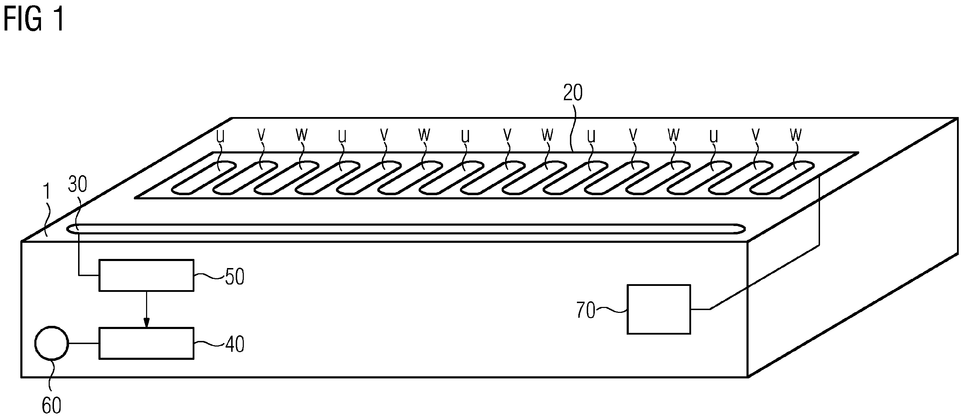

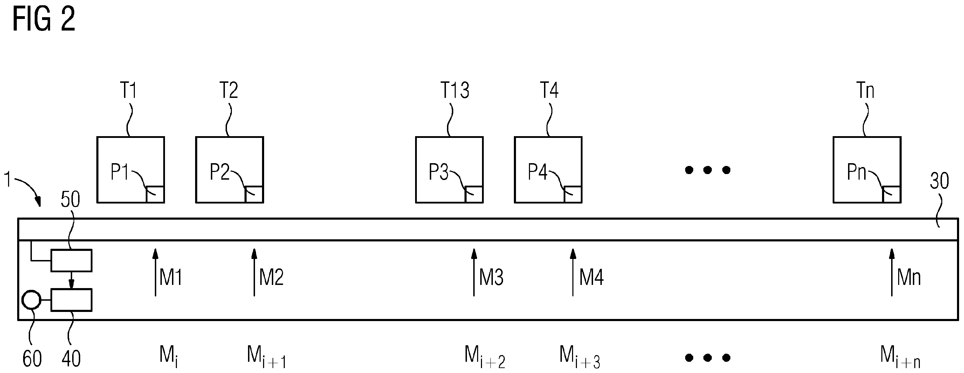

Gemäß FIG 1 ist ein Statorsegment 1 für ein linearmotorbasiertes Transportsystem mit einem Mittel 20 zur Erzeugung eines magnetischen Wanderfeldes dargestellt. Vorteilhafter Weise wird das magnetische Wanderfeld in dem Mittel 20 durch nebeneinander gelegten Spulen mit der Bestromungsfolge UVW, UVW, UVW usw. ausgestaltet. Für die Erfassung einer Position eines auf dem Statorsegment 1 angeordneten Transportläufers ist ein Positionserfassungsmittel 30 vorhanden. Eine Sendeeinheit 40 ist mit einer Auswerteeinheit 50 verbunden, wobei die Auswerteeinheit 50 wiederum mit dem Positionserfassungsmittel 30 verbunden ist. Nach dem Stand der Technik war es bisher bekannt, dass die Sendeeinheit 40 nur einen Regelungsdatensatz sendet. Erfindungsgemäß ist nun das Statorsegment 1 derart ausgestaltet, dass das Positionserfassungsmittel 30 mehrere Positionen M1, M2,...,Mₙ einer Mehrzahl von Transportläufern T1, T2,..,Tₙ (siehe FIG 2) auf dem Statorsegment 1 detektieren kann. Dabei ist zusätzlich eine Auswerteeinheit 50 vorhanden, welche die mehreren Positionen von dem Positionserfassungsmittel 30 entgegennimmt und zur Sendeeinheit 40 weiterleitet. Die Sendeeinheit 40 ist derart weitergebildet, dass diese zusätzlich zu der Übertragung des Regelungsdatensatzes CD einen Positionswert Mᵢ taktsynchron mit überträgt, wobei die mehreren Positionen M1, M2,..,Mₙ als eine Folge F mit einer Anzahl n an Gliedern vorliegen und ein Glied Fᵢ mit den Index i einer Position Mᵢ entspricht, dabei ist die Sendeeinheit 40 weiterhin ausgestaltet, mit jedem ersten Takt TA1 den Index i ausgehend von einem Startwert zu inkrementieren und ein Glied Fᵢ im Anschluss an den Regelungsdatensatz CD zu übertragen, wobei die Sendeeinheit 40 weiterhin ausgestaltet ist, die Übertragung aller Glieder Fᵢ in einen Übertragungsintervall Ü durchzuführen, wobei das Übertragungsintervall Ü einen Vielfachen des ersten Taktes TA1 entspricht. Für einen Anschluss an einen ersten Bus weist das Statorsegment 1 einen Busanschluss 60 auf. Für die Versorgung der Mittel zur Erzeugung des magnetischen Wanderfeldes weist das Statorsegment 1 einen Versorgungsanschluss 70 auf.

Mit der FIG 2 ist das Statorsegment 1 mit darauf angeordneten Transportläufern T1,..,Tₙ dargestellt. Das Positionserfassungsmittel 30 ist in der Lage für den ersten Transportläufer T1 eine erste Position M1, für den zweiten Transportläufer T2 eine zweite Position M2, für den dritten Positionsläufer T3 eine dritte Position M3, für den vierten Transportläufer T4 eine vierte Position M4 bis zu einem n-ten Transportläufer Tₙ eine n-te Position Mₙ zu ermitteln. Die Transportläufer T1, T2,..,Tₙ weisen jeweils einen Permanentmagneten als Positionsgeber P1,..,Pₙ auf. Diese Positionsgeber P1,..,Pₙ wechselwirken mit dem Positionserfassungsmittel 30 und kennzeichnen dabei in den Positionserfassungsmittel 30 beispielsweise nach dem Prinzip der Magnetostriktion die Positionen der Transportläufer T1,..,Tₙ. Diese detektierten Positionen M1,..,Mₙ werden durch die Auswerteeinheit 50 aufbereitet und der Sendeeinheit 40 übermittelt. Die Auswerteeinheit 50 ist ausgestaltet, die Positionen M1,..,Mₙ zu einem Zeitpunkt gemeinsam zu ermitteln.

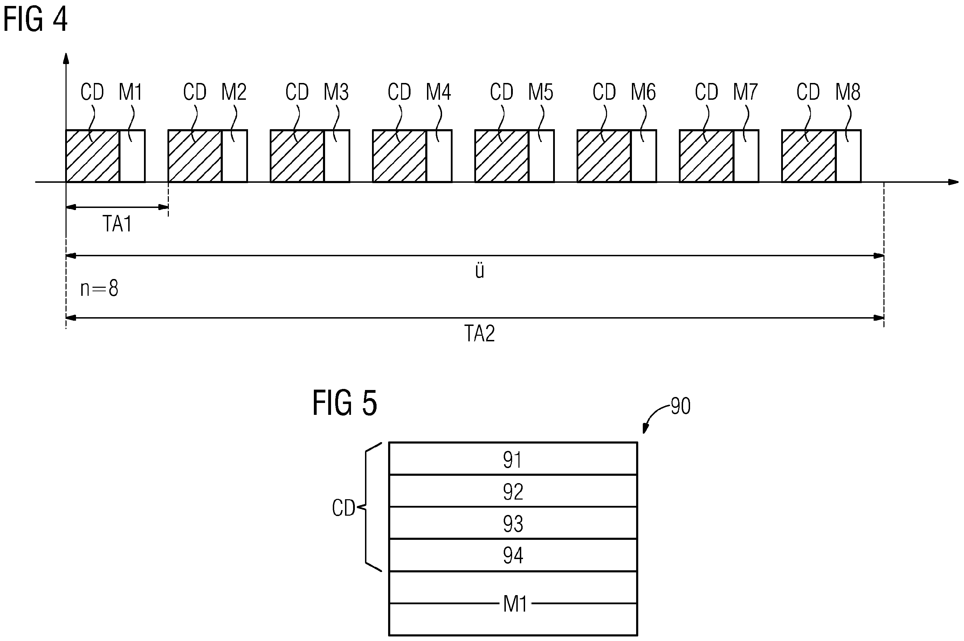

Die Sendeeinheit 40 ist nun dazu ausgestaltet zusätzlich zu den üblicherweise zu übertragenden Regelungsdatensatz CD einen Positionswert Mᵢ taktsynchron mit dem Regelungsdatensatz CD zu übertragen, dabei bilden mehrere Positionen M1,..,Mₙ eine Folge F mit einer Anzahl an N-Gliedern. Ein Glied Fᵢ der Folge F hat somit einen Index i und entspricht einer Position Mᵢ. Die Sendeeinheit 40 ist dazu ausgestaltet mit jedem ersten Takt TA1 den Index i ausgehend von einem Startwert zu inkrementieren und ein Glied Fᵢ im Anschluss an den Regelungsdatensatz CD zu übertragen (siehe FIG 4). Die Sendeeinheit 40 ist weiterhin dazu ausgestaltet die Übertragung aller Glieder Fᵢ in einen Übertragungsintervall Ü durchzuführen, wobei das Übertragungsintervall Ü einem Vielfachen des ersten Taktes TA1 entspricht.

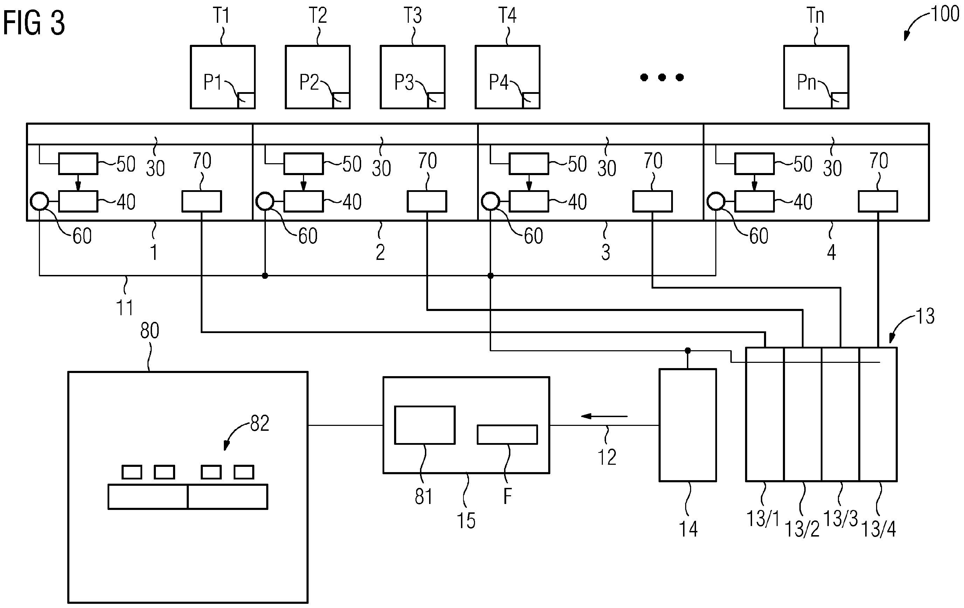

Gemäß der FIG 3 ist ein linearmotorbasiertes System 100 dargestellt. Das Transportsystem 100 umfasst ein erstes Statorsegment 1, ein zweites Statorsegment 2, ein drittes Statorsegment 3 und ein viertes Statorsegment 4, wobei die Statorsegmente 1,..,4 direkt hintereinander angeordnet sind. Auf der durch die Statorsegmente 1,2,3,4 gebildete Transportstrecke befinden sich ein erster Transportläufer T1 bis zu einen n-ten Transportläufer Tₙ.

Jedes Statorsegment ist ähnlich ausgestaltet. Die Beschreibung zur Ausgestaltung der Statorsegmente wurde bereits mit der Beschreibung zu FIG 1 angeführt.

Da jedes Statorsegment 1,..,4 einen Busanschluss 60 aufweist, sind die Statorsegmente 1,..,4 entsprechend mit ihren Busanschlüssen 60 an einen ersten Bus 11 angeschlossen. Der erste Bus 11 ist wiederum mit einer Kontrolleinheit 14 verbunden, wobei der erste Bus 11 zusätzlich mit einem Umrichter 13 verbunden ist. Der Umrichter 13 weist eine erste Umrichterkomponente 13/1 für das erste Statorsegment 1, eine zweite Umrichterkomponente 13/2 für das zweite Statorsegment 2, eine dritte Umrichterkomponente 13/3 für das dritte Statorsegment 3 und eine vierte Umrichterkomponente 13/4 für das vierte Statorsegment 4 auf. Die Umrichterkomponenten 13/1,..,13/4 sind jeweils über die Versorgungsanschlüsse 70 der Statorsegmente 1,..,4 mit den Statorsegmenten 1,..,4 verbunden. Betrachtet man in dem Transportsystem 100 das Statorsegment 2, so befinden sich derzeit auf dem Statorsegment 2 der erste Transportläufer T1, der zweite Transportläufer T2 und der dritte Transportläufer T3. Da das zweite Statorsegment 2 zyklisch einen Regelungsdatensatz CD über den ersten Bus 11 zu der Kontrolleinheit 14 sendet, damit diese wieder um den entsprechenden Umrichter, nämlich die zweite Umrichterkomponente 13/2, regeln kann, wird von der Sendeeinheit 40 zusätzlich zu dem Senden des Regelungsdatensatzes CD die von dem Positionserfassungsmittel 30 erfasste Position M1 des Transportläufers T1 als ein Wert in dem gesendeten Telegramm für den Regelungsdatensatz CD mit gesendet. Im Anschluss an die Übertragung des nächsten zyklisch zu übertragenden Regelungsdatensatzes CD wird von der Sendeeinheit 40 des zweiten Statorsegmentes 2 die Position M2 des Transportläufers T2 zusätzlich zu dem zu übertragenden Regelungsdatensatz CD mit übertragen. Und letztendlich wird in einem dritten Zyklus die Position M3 des dritten Transportläufers T3 wiederum zusätzlich zu dem zyklisch zu übertragenen Regelungsdatensatz CD übertragen. Die übertragenen Positionen M1, M2, M3 liegen nun aufgrund der Übertragung durch den ersten Bus 11 in der Kontrolleinheit 14 vor.

Nach dem die Sendeeinheit 40 nun die ermittelten Positionen in einer Folge F mit den Gliedern Fᵢ an die Kontrolleinheit 14 übertragen hat, können die Positionen weiter über einen zweiten Bus 12 an eine Steuereinheit 15 übertragen werden, da die Kontrolleinheit 14 dazu ausgestaltet ist, die Position Mᵢ wieder zu einem Datum, nämlich der Folge F, zusammen zu setzen kann die Folge F über den zweiten Bus 12 an die Steuereinheit 15 übergeben werden. Die Multipositionswerte liegen nun in der Steuereinheit 15 vor, welche dazu ausgestaltet ist mit Hilfe der Positionen M1,..,Mₙ eine geografische Darstellung der Orte aller im System befindlichen Transportläufert T1,..,Tₙ zu ermitteln. Diese Ermittlung der geografischen Darstellung kann an ein HMI-Gerät mittels eines Aufbereitungsmittels 81 in der Steuerung in der Steuereinheit 15 gesendet werden. Auf dem HMI-Gerät 80 wird nun die geografische Darstellung 82 sichtbar.

Da die Positionen Mᵢ nun zwar hintereinander aber ausschließlich über den ersten Bus 11 übertragen werden, gelangen sie in die Kontrolleinheit 14, welche sowieso über einen zweiten Bus 12 mit der Steuereinheit 15 verbunden ist. Über diesen zweiten Bus 12 werden nun die Positionen Mᵢ an die Steuereinheit 15 weitergeleitet. Mit Vorteil kann nun auf einen zusätzlichen Positionsgeber, welcher an das zweite Bussystem 12 angeschlossen werden müsste, verzichtet werden.

Die FIG 4 zeigt einen zeitlichen Ablauf der Telegrammübertragung von zyklisch gesendeten Regelungsdaten CD. In einem ersten Takt TA1 werden von den Statorsegmenten 1,..,4 immer wieder Regelungsdatensätze CD gesendet. Im Anschluss an jeden zyklisch gesendeten Datensatz CD wird jeweils eine Position Mᵢ angehängt. Die Übertragung aller Positionswerte Mᵢ sollte in einen Übertragungsintervall Ü von Statten gehen. In der Regel ist das Übertragungsintervall Ü gleich gewählt mit einen zweiten Takt TA2.

FIG 5 zeigt einen möglichen Telegrammaufbau eines Paketes aus dem Regelungsdatensatz CD mit einer angehängten Position M1. Der Regelungsdatensatz CD umfasst ein erstes Statuswort 91, ein zweites Statuswort 92, einen Geschwindigkeitswert 93 und einen Wert für einen Kommutierungswinkel 94. An den Regelungsdatensatz schließt sich ein zwei Worte langer Platzhalter an in den der doppelt Wort lange Wert der Position M1 übertragen werden kann.

## Patentansprüche

1. Statorsegment (1) für ein linearmotorbasiertes Transportsystem ausgestaltet um zumindest einen Transportläufer (T1) aufzunehmen, umfassend
- ein Mittel (20) zur Erzeugung eines magnetischen Wanderfeldes,
- ein Positionserfassungsmittel (30) ausgestaltet zur Ermittlung einer Position (M1) eines auf dem Statorsegment (1) befindlichen Transportläufers (T1),
- eine Sendeeinheit (40) ausgestaltet zum zyklischen Übertragen eines Regelungsdatensatzes (CD) zu einem Umrichter für eine geregelte Stromversorgung der Mittel (20) zur Erzeugung eines magnetischen Wanderfeldes in einem ersten Takt (TA1),
wobei das Positionserfassungsmittel (30) ausgestaltet ist mehrere Positionen (M1, M2,..,Mₙ) einer Mehrzahl von Transportläufern (T1, T2,..,Tₙ) auf dem Statorsegment (1) zu detektieren, wobei eine Auswerteeinheit (50) vorhanden ist, welche mit dem Positionserfassungsmittel (30) verbunden ist um die detektierten Positionen (M1, M2,..,Mₙ) zu ermitteln und mit der Sendeeinheit (40) verbunden ist um die Positionen (M1, M2,..,Mₙ) an die Sendeeinheit (40) zu übergeben, d a - **durch gekennzeichnet**, dass die Sendeeinheit (40) derart weitergebildet ist, dass diese zusätzlich zu der Übertragung des Regelungsdatensatzes (CD) einen Positionswert (Mi) taktsynchron mit überträgt, wobei die mehreren Positionen (M1,..,Mₙ) als eine Folge (F) mit einer Anzahl (n) an Gliedern vorliegen und ein Glied (Fᵢ) mit einem Index (i) einer Position (Mᵢ) entspricht, dabei ist die Sendeeinheit (4) weiterhin ausgestaltet mit jedem ersten Takt (TA1) den Index (i) ausgehend von einem Startwert zu inkrementieren und ein Glied (Fᵢ) im Anschluss an den Regelungsdatensatz (CD) zu übertragen, wobei die Sendeeinheit (40) weiterhin ausgestaltet ist die Übertragung aller Glieder (Fᵢ) in einem Übertragungsintervall (Ü) durchzuführen.

2. Statorsegment (1), nach Anspruch 1, wobei die Auswerteeinheit (50) ausgestaltet ist in einem zweiten Takt (TA2) die Positionen (M1,..,Mₙ) zu ermitteln und der zweite Takt (TA2) einem Vielfachen des ersten Taktes (TA1) entspricht.

3. Transportsystem (100) umfassend,
ein Statorsegment (1) nach Anspruch 1 oder 2,
einen ersten Bus (11),
einen zweiten Bus (12),
eine Kontrolleinheit (14),
eine Steuereinheit (15),
**dadurch gekennzeichnet, dass** die Sendeeinheit (40) derart weitergebildet ist, dass diese zusätzlich zu der Übertragung des Regelungsdatensatzes (CD) einen Positionswert (Mi) taktsynchron mit überträgt, wobei die mehreren Positionen (M1,..,Mₙ) als eine Folge (F) mit einer Anzahl (n) an Gliedern vorliegen und ein Glied (Fᵢ) mit einem Index (i) einer Position (Mᵢ) entspricht, dabei ist die Sendeeinheit (40) weiterhin ausgestaltet mit jedem ersten Takt (TA1) den Index (i) ausgehend von einem Startwert zu inkrementieren und ein Glied (Fᵢ) im Anschluss an den Regelungsdatensatz (CD) über den ersten Bus (11) an die Kontrolleinheit (14) zu übertragen, wobei die Sendeeinheit (40) weiterhin ausgestaltet ist die Übertragung aller Glieder (Fᵢ) in einem Übertragungsintervall (Ü) durchzuführen, die Kontrolleinheit (14) ist dazu ausgestaltet die Folge (F) entgegen zu nehmen und ist weiterhin dazu ausgestaltet die Folge(F) über den zweiten Bus (12) an die Steuereinheit (15) zu übergeben.

4. Transportsystem (100) nach Anspruch 3, wobei die Steuereinheit (15) dazu ausgestaltet ist mit Hilfe der Positionen (M1, M2,..,Mₙ) eine geografische Darstellung der Orte aller im System befindlichen Transportläufer (T1, T2,..,Tₙ) zu ermitteln.

5. Transportsystem (100) nach Anspruch 3 oder 4, wobei ein Umrichter (13) an die Mittel (2) zur Erzeugung des magnetischen Wanderfeldes angeschlossen ist.

6. Transportsystem (100) nach Anspruch 5, wobei die Kontrolleinheit (14) über den ersten Bus (11) mit dem Umrichter (13) verbunden ist.

7. Transportsystem (100) nach einem der Ansprüche 3 bis 6, wobei als Positionserfassungsmittel (3) ein Wegaufnehmer eingesetzt ist, welcher nach einem der Prinzipien
magnetostriktiv,
kapazitiv,
magnetisch,
optisch, differential transformatorisch,
insbesondere magnetisch nach dem Halleffekt Prinzip, arbeitet und damit als ein Multipositionserfassungsmittel arbeitet.

8. Transportsystem (100) nach einem der Ansprüche 3 bis 7, wobei das Positionserfassungsmittel (3) derart angeordnet ist, dass es nicht durch einen Sekundärteil des Transportläufers beeinflusst wird, wobei die Transportläufer zur Positionsermittlung einer Permanentmagneten oder ein optisches Element als Positionsgeber (P1) für das Positionserfassungsmittel (3) aufweisen.

## Claims

1. Stator segment (1) for a linear motor-based transport system realised to receive at least one transport rotor (T1), comprising
- a means (20) for generating a magnetic traveling field,
- a position acquisition means (30) realised for determining a position (M1) of a transport rotor (T1) located on the stator segment (1),
- a transmitter unit (40) realised for cyclic transmission of a control data record (CD) to a converter for a controlled current supply to the means (20) for generating a magnetic traveling field in a first clock cycle (TA1),
wherein the position acquisition means (30) is realised to detect a plurality of positions (M1, M2 ... Mₙ) of a plurality of transport rotors (T1, T2 ... Tₙ) on the stator segment (1), wherein an evaluation unit (50) is present, which evaluation unit is connected to the position acquisition means (30) to determine the detected positions (M1, M2 ... Mₙ) and connected to the transmitter unit (40) to transfer the positions (M1, M2 ... Mₙ) to the transmitter unit (40), **characterised in that** the transmitter unit (40) is developed such that, in addition to transmitting the control data record (CD), it also transmits a position value (Mi) in a clock-synchronised manner, wherein the plurality of positions (M1 ... Mₙ) are available as a sequence (F) with a quantity (n) of elements and an element (Fᵢ) with an index (i) corresponds to a position (Mᵢ), and in this regard the transmitter unit (40) is furthermore realised, upon every first clock cycle (TA1), to increment the index (i) commencing from a starting value and to transmit an element (Fᵢ) after the control data record (CD), wherein the transmitter unit (40) is furthermore realised to carry out the transmission of all elements (Fᵢ) in one transmission interval (Ü).

2. Stator segment (1) according to claim 1, wherein the evaluation unit (50) is realised to determine the positions (M1 ... Mₙ) in a second clock cycle (TA2) and the second clock cycle (TA2) corresponds to a multiple of the first clock cycle (TA1) .

3. Transport system (100) comprising:
a stator segment (1) according to claim 1 or 2,
a first bus (11),
a second bus (12),
a monitoring unit (14),
and a control unit (15),
**characterised in that** the transmitter unit (40) is developed such that, in addition to transmitting the control data record (CD), it also transmits a position value (Mi) in a clock-synchronised manner, wherein the plurality of positions (M1 ... Mₙ) are available as a sequence (F) with a quantity (n) of elements and an element (Fᵢ) with an index (i) corresponds to a position (Mᵢ), and in this regard the transmitter unit (40) is furthermore realised, upon every first clock cycle (TA1), to increment the index (i) commencing from a starting value and to transmit an element (Fᵢ) after the control data record (CD) to the monitoring unit (14) via the first bus (11), wherein the transmitter unit (40) is furthermore realised to carry out the transmission of all elements (Fᵢ) in one transmission interval (Ü), and the monitoring unit (14) is realised so as to receive the sequence (F) and is furthermore realised so as to transfer the sequence (F) to the control unit (15) via the second bus (12).

4. Transport system (100) according to claim 3, wherein the control unit (15) is realised so as to determine, with the aid of the positions (M1, M2 ... Mₙ), a geographical representation of the locations of all the transport rotors (T1, T2 ... Tₙ) situated in the system.

5. Transport system (100) according to claim 3 or 4, wherein a converter (13) is connected to the means (2) for generating the magnetic traveling field.

6. Transport system (100) according to claim 5, wherein the monitoring unit (14) is connected to the converter (13) via the first bus (11).

7. Transport system (100) according to one of claims 3 to 6, wherein a travel recorder is employed as the position acquisition means (3), which travel recorder operates according to one of the principles:
magnetostrictive,
capacitive,
magnetic,
optical, or differentially transforming,
and in particular magnetic according to the Hall effect principle and therefore operates as a multi-position acquisition means.

8. Transport system (100) according to one of claims 3 to 7, wherein the position acquisition means (3) is arranged such that it is not influenced by a secondary part of the transport rotor, wherein for the purpose of determining position, the transport rotors have a permanent magnet or an optical element as a position sensor (P1) for the position acquisition means (3) .

## Revendications

1. Segment (1) de stator d'un système de transport à moteur linéaire conformé pour recevoir au moins un induit (T1) de transport, comprenant
- un moyen (20) de production d'un champ magnétique mobile,
- un moyen (30) de détection de position conformé pour détecter une position (M1) d'un induit (T1) de transport se trouvant sur le segment (1) de stator,
- une unité (40) d'émission conformée pour transmettre cycliquement un jeu (CD) de données de régulation à un convertisseur pour réguler l'alimentation en courant du moyen (20) de production d'un champ magnétique mobile dans un premier cycle (TA1),
dans lequel le moyen (30) de détection de position est conformé pour détecter plusieurs positions (M1, M2, .., Mₙ) d'une pluralité d'induits (T1, T2, .., Tₙ) de transport sur le segment (1) de stator, dans lequel il y a une unité (50) d'exploitation, qui est reliée au moyen (30) de détection de position, pour déterminer les positions (M1, M2, .., Mₙ) détectées, et qui est reliée à l'unité (40) d'émission, pour donner les positions (M1, M2, .., Mₙ) à l'unité (40) d'émission, **caractérisé en ce que** l'unité (40) d'émission est constituée, en outre, pour transmettre en synchronisme avec les cycles, supplémentairement à la transmission du jeu (CD) de données de régulation, une valeur (Mi) de position, les plusieurs positions (M1, .., Mₙ) étant présentes sous la forme d'une suite (F) ayant un nombre (n) d'éléments et un élément (Fᵢ) correspondant à un indice (i) d'une position (Mᵢ), l'unité (4) d'émission étant constituée, en outre, pour incrémenter, à partir d'une valeur initiale, l'indice (i) à chaque premier cycle (TA1) et transmettre un élément (Fᵢ) à la suite du jeu (CD) de données de régulation, l'unité (40) d'émission étant conformée, en outre, pour effectuer la transmission de tous les éléments (Fᵢ ) dans un intervalle (Ü) de transmission.

2. Segment (1) de stator suivant la revendication 1, dans lequel l'unité (50) d'exploitation est conformée pour déterminer, dans un deuxième cycle (TA2), les positions (M1, .., Mₙ) et le deuxième cycle (TA2) correspond à un multiple du premier cycle (TA1).

3. Système (100) de transport comprenant,
un segment (1) de stator suivant la revendication 1 ou 2,
un premier bus (11),
un deuxième bus (12),
une unité (14) de contrôle,
une unité (15) de commande,
**caractérisé en ce que** l'unité (40) d'émission est constituée, en outre, pour transmettre en synchronisme avec les cycles, supplémentairement à la transmission du jeu (CD) de données de régulation, une valeur (Mi) de position, les plusieurs positions (M1, .., Mₙ) étant présentes sous la forme d'une suite (F) ayant un nombre (n) d'éléments et un élément (Fᵢ) correspondant à un indice (i) d'une position (Mᵢ), l'unité (4) d'émission étant constituée, en outre, pour incrémenter, à partir d'une valeur initiale, l'indice (i) à chaque premier cycle (TA1) et pour transmettre un élément (Fᵢ) à la suite du jeu (CD) de données de régulation par l'intermédiaire du premier bus (11) à l'unité (14) de contrôle, l'unité (40) d'émission étant conformée, en outre, pour effectuer la transmission de tous les éléments (Fᵢ) dans un intervalle (Ü) de transmission, l'unité (14) de contrôle étant constituée pour recevoir la suite (F) et étant, en outre, constituée pour donner la suite (F) à l'unité (15) de commande par l'intermédiaire du deuxième bus (12).

4. Système (100) de transport suivant la revendication 3, dans lequel l'unité (15) de commande est constituée pour, à l'aide des positions (M1, M2, .., Mₙ), déterminer une position géographique des emplacements de tous les induits (T1, T2, .., Tₙ) de transport se trouvant dans le système.

5. Système (100) de transport suivant la revendication 3 ou 4, dans lequel un convertisseur (13) est raccordé au moyen (12) pour produire le champ magnétique mobile.

6. Système (100) de transport suivant la revendication 5, dans lequel l'unité (14) de contrôle est reliée au convertisseur (13) par le premier bus (11).

7. Système (100) de transport suivant l'une des revendications 3 à 6, dans lequel il est utilisé, comme moyen (3) de position, un capteur de déplacement, qui fonctionne suivant l'un des principes
magnétostrictif,
capacitif,
magnétique,
optique, notamment à transformation différentielle,
notamment magnétique suivant l'effet de Hall et fonctionne ainsi en moyen de détection de positions multiples.

8. Système (100) de transport suivant l'une des revendications 3 à 7, dans lequel le moyen (3) de détection de position est disposé de manière à ne pas être influencé par une partie secondaire de l'induit de transport, les induits de transport ayant, comme indicateur (P1) de position du moyen (3) de détection de position, pour la détermination de position, un aimant permanent ou un élément optique.
